# EUROPEAN PATENT APPLICATION

(11) **EP 4 398 635 A2**
(43) Date of publication of application: **10.07.2024**
(21) Application number: 24177914.9
(22) Date of filing: 04.05.2022
(51) Int. Cl.: H04W 36/12

(54) **METHOD AND APPARATUS FOR CONTROLLING A USER DEVICE IN A NETWORK**

(62) Divisional of application: 22171670.7
(71) Applicant: Nokia Technologies Oy, 02610 Espoo (FI)
(72) Inventor: WON, Sung Hwan, Flower Mound, TX 75028 (US); WOLFNER, György Tamás, 1163 Budapest (HU); CASATI, Alessio, West Molesey, Surrey KT8 1NT (GB)
(74) Representative: Samson & Partner Patentanwälte mbB

(57) **Abstract**

Techniques for controlling the behavior of a user device toward a cell in a sliced network are provided. For example, a method of controlling a user device is disclosed. The method comprises: receiving, by the user device, a configuration message from a network node, the configuration message including network slice access stratum group (NSAG) information; and performing a random access in accordance with the NSAG information and a single network slice selection assistance information (S-NSSAI). The S-NSSAI is associated with a protocol data unit session for which an uplink user data packet is to be sent or a session management message is associated with.

## Description

### THECHNICAL FIELD

The subject disclosure generally relates to wireless communication systems and more particularly, to wireless communication systems allowing to control behavior of a user device toward a cell in a network. Yet more particularly, the subject disclosure provides methods and apparatuses of controlling a user device.

### BACKGROUND

Wireless telecommunication systems are under constant development. There is a constant need for higher data rates and high quality of service. Reliability requirements are constantly rising and ways and means to ensure reliable connections and data traffic while keeping transmission delays minimal are constantly under development.

Developing networks enable new services to customers. One service is network slicing, which enables offering connectivity, quality of service and data processing solutions tailored to specific customers' requirements. A network slice is a logical end-to-end virtual network that can be dynamically created and that provides specific capabilities and characteristics. Multiple network slices may be created on top of a common shared physical network infrastructure to run services that may have different requirements on latency, reliability, throughput and mobility. For example, in 5G, network slicing will be a key feature to support different services using the same underlying mobile network infrastructure.

The use of network slices may require techniques for controlling a behavior for network slice-specific cell reselection or random access.

### SUMMARY

According to a first aspect of the subject disclosure, a method for controlling a user device is provided. The method comprises receiving, by the user device, a configuration message from a network node, the configuration message indicating whether to perform a cell reselection procedure and/or a random-access procedure taking into account priority of one or more network slice groups; and performing, by the user device, the cell reselection procedure and/or the random-access procedure taking into account priority of one or more network slice groups in accordance with the configuration message.

The method at the user device according to the first aspect may be used to control the behavior of the user device to enable/disable at least one of the cell reselection procedure and the random-access procedure selectively.

In some embodiments of the first aspect, the configuration message may include at least one of a first indication indicating whether to perform the cell reselection procedure taking into account priority of one or more network slice groups and a second indication indicating whether to perform the random-access procedure taking into account priority of one or more network slice groups.

In some embodiments of the first aspect, the configuration message may include a single indication comprising a first bit indicating whether to perform the cell reselection procedure taking into account priority of one or more network slice groups and a second bit indicating whether to perform the random-access procedure taking into account priority of one or more network slice groups.

In other embodiments of the first aspect, the method may further comprise determining, by the user device, whether the configuration message includes priority information related to the cell reselection procedure and/or the random-access procedure; in response to determining a presence of the priority information, deriving, by the user device, that the configuration message indicates to perform the cell reselection procedure and/or the random-access procedure taking into account priority of one or more network slice groups; and in response to determining an absence of the priority information, deriving, by the user device, that the configuration message indication to not perform the cell reselection procedure and/or the random-access procedure taking into account priority of one or more network slice groups.

In some embodiments of the first aspect, the configuration message may include network slice access stratum group, NASG, information for one or more single network slice selection assistance information, S-NSSAI, in a configured NSSAI.

In some embodiments of the first aspect, the configuration message may be a registration accept message or a configuration command message.

In some embodiments of the first aspect, the user device may comprise a first layer receiving the configuration message and a second layer performing the cell reselection procedure and/or the random-access procedure taking into account priority of one or more network slice groups. In such embodiments, the method may further comprise providing, by the first layer to the second layer, information to selectively enable or disable performing the cell reselection procedure and/or the random-access procedure taking into account priority of one or more network slice groups. For example, the first layer may comprise a non-access stratum layer and the second layer may comprise an access stratum layer.

In some embodiments of the first aspect, the user device may comprise a first layer receiving the configuration message and a second layer performing the cell reselection procedure and/or the random-access procedure taking into account priority of one or more network slice groups. In such embodiments, the method may further comprise providing, by the first layer to the second layer, information for the cell reselection procedure taking into account priority of one or more network slice groups if the configuration message implies that the cell reselection procedure taking into account priority of one or more network slice groups needs to be performed; and providing, by the first layer to the second layer, information for the random-access procedure taking into account priority of one or more network slice groups if the configuration message implies that the random-access procedure taking into account priority of one or more network slice groups needs to be performed. For example, the first layer may comprise a non-access stratum layer and the second layer may comprise an access stratum layer.

In some embodiments of the first aspect, the method may further comprise sending, by the user device to the network node, capability information indicating support for the cell reselection procedure and/or the random-access procedure taking into account priority of one or more network slice groups. The configuration message may be received in response to sending the capability information and indicating whether to enable or disable the cell reselection procedure and/or the random-access procedure supported by the user device.

According to a second aspect of the subject disclosure, a method for controlling a user device is provided. The method comprises sending, by a network node, a configuration message to the user device, the configuration message indicating whether the user device is to perform a cell reselection procedure and/or a random-access procedure taking into account priority of one or more network slice groups; and performing, by the network node, the cell reselection procedure and/or the random-access procedure taking into account priority of one or more network slice groups in accordance with the configuration message with the user device.

The method at the network node according to the second aspect may be used to control the behavior of the user device to enable/disable at least one of the cell reselection procedure and the random-access procedure selectively.

In some embodiments of the second aspect, the configuration message may include at least one of a first indication indicating whether to perform the cell reselection procedure taking into account priority of one or more network slice groups and a second indication indicating whether to perform the random-access procedure taking into account priority of one or more network slice groups.

In some embodiments of the second aspect, the configuration message may include a single indication comprising a first bit indicating whether to perform the cell reselection procedure taking into account priority of one or more network slice groups and a second bit indicating whether to perform the random-access procedure taking into account priority of one or more network slice groups.

In other embodiments of the second aspect, the method may further comprise indicating, by the network node, that the user device is to perform the cell reselection procedure and/or the random-access procedure taking into account priority of one or more network slice groups by sending the configuration message including priority information related to the cell reselection procedure and/or the random-access procedure; and indicating, by the network node, that the user device is not to perform the cell reselection procedure and/or the random-access procedure taking into account priority of one or more network slice groups by sending the configuration not including the priority information.

In some embodiments of the second aspect, the configuration message may include network slice access stratum group, NASG, information for one or more single network slice selection assistance information, S-NSSAI, in a configured NSSAI.

In some embodiments of the second aspect, the configuration message may be a registration accept message or a configuration command message.

In some embodiments of the second aspect, the method may further comprise receiving, by the network node from the user device, capability information indicating support for the cell reselection procedure and/or the random-access procedure taking into account priority of one or more network slice groups. The configuration message may be sent in response to receiving the capability information and indicating whether to enable or disable the cell reselection procedure and/or the random-access procedure supported by the user device.

In some embodiments of the first and second aspects, the user device may comprise a user equipment (UE) and the network node may comprise an access and mobility management function (AMF) of a network. For example, the network may support network slicing.

According to a third aspect of the subject disclosure, a computer program product is provided. The computer program product may comprise instructions which, when the computer program product is executed by a computer, cause the computer to carry out a method according to the first aspect, the second aspects, or embodiments of the first and second aspects.

According to a fourth aspect of the subject disclosure, a computer-readable storage medium is provided. The computer-readable storage medium may have stored thereon the computer program product of the third aspect.

According to a fifth aspect of the subject disclosure, a data carrier signal carrying the computer program product of the fourth aspect is provided.

According to a sixth aspect of the subject disclosure, a user device is provided.

According to the sixth aspect of the subject disclosure, the user device may comprise at least one processor, and at least one memory including computer program code. The computer program code may cause the user device, when executed with the at least one processor, to receive a configuration message from a network node, the configuration message indicating whether to perform a cell reselection procedure and/or a random-access procedure taking into account priority of one or more network slice groups; and perform the cell reselection procedure and/or the random-access procedure in accordance with the configuration message taking into account priority of one or more network slice groups.

According to the sixth aspect of the subject disclosure, the user device may comprise means being adapted to receive a configuration message from a network node, the configuration message indicating whether to perform a cell reselection procedure and/or a random-access procedure taking into account priority of one or more network slice groups; and means being adapted to perform the cell reselection procedure and/or the random-access procedure in accordance with the configuration message taking into account priority of one or more network slice groups.

In accordance with the sixth aspect, the behavior of the user device may be controlled to enable/disable at least one of the cell reselection procedure and the random-access procedure selectively.

In some embodiments of the sixth aspect, the configuration message may include at least one of a first indication indicating whether to perform the cell reselection procedure taking into account priority of one or more network slice groups and a second indication indicating whether to perform the random-access procedure taking into account priority of one or more network slice groups.

In some embodiments of the sixth aspect, the configuration message may include a single indication comprising a first bit indicating whether to perform the cell reselection procedure taking into account priority of one or more network slice groups and a second bit indicating whether to perform the random-access procedure taking into account priority of one or more network slice groups.

In other embodiments of the sixth aspect, the computer program code may cause the user device, when executed with the at least one processor, to determine whether the configuration message includes priority information related to the cell reselection procedure and/or the random-access procedure; in response to determining a presence of the priority information, derive that the configuration message indicates to perform the cell reselection procedure and/or the random-access procedure taking into account priority of one or more network slice groups; and in response to determining an absence of the priority information, derive that the configuration message indication to not perform the cell reselection procedure and/or the random-access procedure taking into account priority of one or more network slice groups.

In other embodiments of the sixth aspect, the user device may comprise means being adapted to determine whether the configuration message includes priority information related to the cell reselection procedure and/or the random-access procedure taking into account priority of one or more network slice groups; in response to determining a presence of the priority information, derive that the configuration message indicates to perform the cell reselection procedure and/or the random-access procedure taking into account priority of one or more network slice groups; and in response to determining an absence of the priority information, derive that the configuration message indication to not perform the cell reselection procedure and/or the random-access procedure taking into account priority of one or more network slice groups.

In some embodiments of the sixth aspect, the configuration message may include network slice access stratum group, NASG, information for one or more single network slice selection assistance information, S-NSSAI, in a configured NSSAI.

In some embodiments of the sixth aspect, the configuration message may be a registration accept message or a configuration command message.

In some embodiments of the sixth aspect, the user device may comprise a first layer receiving the configuration message and a second layer performing the cell reselection procedure and/or the random-access procedure taking into account priority of one or more network slice groups. In such embodiments, the computer program code may cause the user device, when executed with the at least one processor, to provide, by the first layer to the second layer, information to selectively enable or disable performing the cell reselection procedure and/or the random-access procedure. For example, the first layer may comprise a non-access stratum layer and the second layer may comprise an access stratum layer. Further, in such embodiments, the user device may comprise means being adapted to provide, by the first layer to the second layer, information to selectively enable or disable performing the cell reselection procedure and/or the random-access procedure taking into account priority of one or more network slice groups. For example, the first layer may comprise a non-access stratum layer and the second layer may comprise an access stratum layer.

In some embodiments of the sixth aspect, the user device may comprise a first layer receiving the configuration message and a second layer performing the cell reselection procedure and/or the random-access procedure taking into account priority of one or more network slice groups. In such embodiments, the computer program code may cause the user device, when executed with the at least one processor, to provide, by the first layer to the second layer, information for the cell reselection procedure taking into account priority of one or more network slice groups if the configuration message implies that the cell reselection procedure taking into account priority of one or more network slice groups needs to be performed; and provide, by the first layer to the second layer, information for the random-access procedure taking into account priority of one or more network slice groups if the configuration message implies that the random-access procedure taking into account priority of one or more network slice groups needs to be performed. Further, in such embodiments, the user device may comprise means being adapted to provide, by the first layer to the second layer, information for the cell reselection procedure taking into account priority of one or more network slice groups if the configuration message implies that the cell reselection procedure taking into account priority of one or more network slice groups needs to be performed; and means being adapted to provide, by the first layer to the second layer, information for the random-access procedure taking into account priority of one or more network slice groups if the configuration message implies that the random-access procedure taking into account priority of one or more network slice groups needs to be performed. For example, the first layer may comprise a non-access stratum layer and the second layer may comprise an access stratum layer.

In some embodiments of the sixth aspect, the computer program code may cause the user device, when executed with the at least one processor, to send, to the network node, capability information indicating support for the cell reselection procedure and/or the random-access procedure taking into account priority of one or more network slice groups. The configuration message may be received in response to sending the capability information and indicating whether to enable or disable the cell reselection procedure and/or the random-access procedure supported by the user device.

In some embodiments of the sixth aspect, the user device may comprise means being adapted to send, to the network node, capability information indicating support for the cell reselection procedure and/or the random-access procedure taking into account priority of one or more network slice groups. The configuration message may be received in response to sending the capability information and indicating whether to enable or disable the cell reselection procedure and/or the random-access procedure supported by the user device.

According to a seventh aspect of the subject disclosure, a network device is provided.

According to a seventh aspect of the subject disclosure, the network device may comprise at least one processor, and at least one memory including computer program code. The computer program code may cause the network device, when executed with the at least one processor, to send a configuration message to the user device, the configuration message indicating whether the user device is to perform a cell reselection procedure and/or a random-access procedure taking into account priority of one or more network slice groups; and perform the cell reselection procedure and/or the random-access procedure taking into account priority of one or more network slice groups in accordance with the configuration message with the user device.

According to a seventh aspect of the subject disclosure, the network device may comprise means being adapted to send a configuration message to the user device, the configuration message indicating whether the user device is to perform a cell reselection procedure and/or a random-access procedure taking into account priority of one or more network slice groups; and means being adapted to perform the cell reselection procedure and/or the random-access procedure taking into account priority of one or more network slice groups in accordance with the configuration message with the user device.

In accordance with the seventh aspect, the network node may control the behavior of the user device to enable/disable at least one of the cell reselection procedure and the random-access procedure selectively.

In some embodiments of the seventh aspect, the configuration message may include at least one of a first indication indicating whether to perform the cell reselection procedure taking into account priority of one or more network slice groups and a second indication indicating whether to perform the random-access procedure taking into account priority of one or more network slice groups.

In some embodiments of the seventh aspect, the configuration message may include a single indication comprising a first bit indicating whether to perform the cell reselection procedure taking into account priority of one or more network slice groups and a second bit indicating whether to perform the random-access procedure taking into account priority of one or more network slice groups.

In other embodiments of the seventh aspect, the computer program code may cause the network device, when executed with the at least one processor, to indicate that the user device is to perform the cell reselection procedure and/or the random-access procedure taking into account priority of one or more network slice groups by sending the configuration message including priority information related to the cell reselection procedure and/or the random-access procedure; and indicate that the user device is not to perform the cell reselection procedure and/or the random-access procedure taking into account priority of one or more network slice groups by sending the configuration not including the priority information.

In other embodiments of the seventh aspect, the network device may comprise means being adapted to indicate that the user device is to perform the cell reselection procedure and/or the random-access procedure taking into account priority of one or more network slice groups by sending the configuration message including priority information related to the cell reselection procedure and/or the random-access procedure; and means being adapted to indicate that the user device is not to perform the cell reselection procedure and/or the random-access procedure taking into account priority of one or more network slice groups by sending the configuration not including the priority information.

In some embodiments of the seventh aspect, the configuration message may include network slice access stratum group, NASG, information for one or more single network slice selection assistance information, S-NSSAI, in a configured NSSAI.

In some embodiments of the seventh aspect, the configuration message may be a registration accept message or a configuration command message.

In some embodiments of the seventh aspect, the computer program code may cause the network device, when executed with the at least one processor, to receive, from the user device, capability information indicating support for the cell reselection procedure and/or the random-access procedure taking into account priority of one or more network slice groups. The configuration message may be sent in response to receiving the capability information and indicating whether to enable or disable the cell reselection procedure and/or the random-access procedure supported by the user device.

In some embodiments of the seventh aspect, the network device may comprise means being adapted to receive, from the user device, capability information indicating support for the cell reselection procedure and/or the random-access procedure taking into account priority of one or more network slice groups. The configuration message may be sent in response to receiving the capability information and indicating whether to enable or disable the cell reselection procedure and/or the random-access procedure supported by the user device.

In some embodiments of the sixth and seventh aspects, the user device may comprise a user equipment (UE) and the network node may comprise an access and mobility management function (AMF) of a network. For example, the network may support network slicing.

The above-noted aspects and features may be implemented in systems, apparatuses, methods, articles and/or non-transitory computer-readable media depending on the desired configuration. The subject disclosure may be implemented in and/or used with a number of different types of devices, including but not limited to cellular phones, tablet computers, wearable computing devices, portable media players, and any of various other computing devices.

This summary is intended to provide a brief overview of some of the aspects and features according to the subject disclosure. Accordingly, it will be appreciated that the above-described features are merely examples and should not be construed to narrow the scope of the subject disclosure in any way. Other features, aspects, and advantages of the subject disclosure will become apparent from the following detailed description, drawings and claims.

### LIST OF ABBREVIATIONS

In the subject disclosure, the following abbreviations are used and should be understood in accordance with the given definitions:
- AMF: Access and mobility management function
- AS: Access stratum
- CN: Core network
- NAS: Non-AS
- NSAG: Network slice AS group
- NSSAI: Network slice selection assistance information
- RA: Random Access
- RAN: Radio access network
- S-NSSAI: Single NSSAI
- UE: User equipment

### BRIEF DESCRIPTION OF THE DRAWINGS

A better understanding of the subject disclosure can be obtained when the following detailed description of various embodiments is considered in conjunction with the following drawings, in which:
FIG. 1 shows a schematic diagram of an example communication system comprising a base station and a plurality of communication devices;
FIG. 2 shows a schematic diagram of an example mobile communication device;
FIG. 3 shows a schematic diagram of an example control apparatus;
FIG. 4 illustrates a network slicing scenario;
FIG. 5 illustrates an exemplary message sequence diagram for the concept of network slice-based cell reselection and network slice-aware random access;
FIGS. 6 and 7 illustrate flow charts of methods for controlling behavior of a user device toward a cell in a network according to some embodiments; and
FIG. 8 illustrates a message sequence diagram of a method for controlling behavior of a user device toward a cell in a network according to some embodiments.

### DETAILED DESCRIPTION

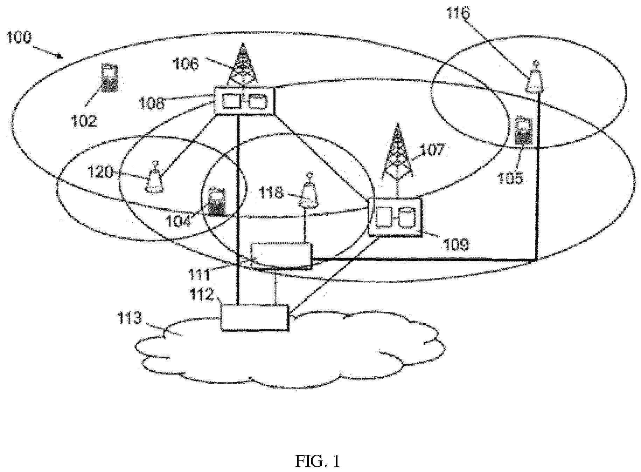

Before explaining the examples in detail, certain general principles of a wireless communication system and mobile communication devices are briefly explained with reference to FIGS. 1 to 3 to assist in understanding the technology underlying the described examples.

In a wireless communication system 100, such as that shown in FIG. 1, mobile communication devices, user devices, User Equipment (UE) 102, 104, 105 are provided wireless access via at least one base station (e.g., next generation NB, gNB), similar wireless transmitting and/or receiving node or network node. Base stations may be controlled or assisted by at least one appropriate controller apparatus, so as to enable operation thereof and management of mobile communication devices in communication with the base stations. The controller apparatus may be located in a Radio Access Network (RAN) (e.g., wireless communication system 100) or in a Core Network (CN) (not shown) and may be implemented as one central apparatus or its functionality may be distributed over several apparatuses. The controller apparatus may be part of the base station and/or provided by a separate entity such as a Radio Network Controller (RNC). In FIG. 1, control apparatus 108 and 109 are shown to control the respective macro level base stations 106 and 107. The control apparatus of a base station can be interconnected with other control entities. The control apparatus is typically provided with memory capacity and at least one data processor. The control apparatus and functions may be distributed between a plurality of control units. In some systems, the control apparatus may additionally or alternatively be provided in the RNC.

In FIG. 1, base stations 106 and 107 are shown as connected to a wider communications network 113 via gateway 112. A further gateway function may be provided to connect to another network.

As used herein, the term "base station" has the full breadth of its ordinary meaning, and at least includes a wireless communication station installed at a fixed location and used to communicate as part of a wireless telephone system or radio system. The communication area (or coverage area) of the base stations may be referred to as a "cell." The base stations and the UEs may be configured to communicate over the transmission medium using any of various Radio Access Technologies (RATs), also referred to as wireless communication technologies, or telecommunication standards described hereinbelow. As illustrated in FIG. 1, while one of the base stations may act as a "serving cell" for UEs, each UE may also be capable of receiving signals from (and possibly within communication range of) one or more other cells (which might be provided by the base stations and/or any other base stations), which may be referred to as "neighboring cells".

The smaller base stations 116, 118 and 120 may also be connected to the network 113, for example by a separate gateway function and/or via the controllers of the macro level stations. The base stations 116, 118 and 120 may be pico or femto level base stations or the like. In the example, stations 116 and 118 are connected via a gateway 111 whilst station 120 connects via the controller apparatus 108. In some embodiments, the smaller stations may not be provided. Smaller base stations 116, 118 and 120 may be part of a second network, for example, Wireless Local Area Network (WLAN) and may be WLAN Access Points (APs). The communication devices 102, 104, 105 may access the communication system based on various access techniques, such as Code Division Multiple Access (CDMA), or Wideband CDMA (WCDMA). Other non-limiting examples comprise Time Division Multiple Access (TDMA), Frequency Division Multiple Access (FDMA) and various schemes thereof such as the Interleaved Frequency Division Multiple Access (IFDMA), Single Carrier Frequency Division Multiple Access (SC-FDMA) and Orthogonal Frequency Division Multiple Access (OFDMA), Space Division Multiple Access (SDMA) and so on.

An example of wireless communication systems are architectures standardized by the 3rd Generation Partnership Project (3GPP). A latest 3GPP based development is often referred to as the Long-Term Evolution (LTE) of the Universal Mobile Telecommunications System (UMTS) radio-access technology. The various development stages of the 3GPP specifications are referred to as releases. More recent developments of the LTE are often referred to as LTE Advanced (LTE-A). The LTE (or LTE-A) employs a radio mobile architecture known as the Evolved Universal Terrestrial Radio Access Network (E-UTRAN) and a Core Network known as the Evolved Packet Core (EPC). Base stations of such systems are known as evolved or enhanced Node Bs (eNBs) and provide E-UTRAN features such as user plane Packet Data Convergence/Radio Link Control/Medium Access Control/Physical layer protocol (PDCP/RLC/MAC/PHY) and control plane Radio Resource Control (RRC) protocol terminations towards the communication devices. Other examples of radio access system comprise those provided by base stations of systems that are based on technologies such as WLAN and/or Worldwide interoperability for Microwave access (WiMax). A base station can provide coverage for an entire cell or similar radio service area. Core network elements include Mobility Management Entity (MME), Serving Gateway (S-GW) and Packet Gateway (P-GW).

An example of a suitable communications system is the 5G or NR concept. Network architecture in NR may be similar to that of LTE-A. Base stations of NR systems may be known as next generation Node Bs (gNBs). Changes to the network architecture may depend on the need to support various radio technologies and finer Quality of Service (QoS) support, and some on-demand requirements for QoS levels to support Quality of Experience (QoE) of user point of view. Also network aware services and applications, and service and application aware networks may bring changes to the architecture. Those are related to Information Centric Network (ICN) and User-Centric Content Delivery Network (UC-CDN) approaches. NR may use Multiple Input-Multiple Output (MIMO) antennas, many more base stations or nodes than the LTE (a so-called small cell concept), including macro sites operating in co-operation with smaller stations and perhaps also employing a variety of radio technologies for better coverage and enhanced data rates.

Future networks may utilize Network Functions Virtualization (NFV) which is a network architecture concept that proposes virtualizing network node functions into "building blocks" or entities that may be operationally connected or linked together to provide services. A Virtualized Network Function (VNF) may comprise one or more virtual machines running computer program codes using standard or general type servers instead of customized hardware. Cloud computing or data storage may also be utilized. In radio communications this may mean node operations to be carried out, at least partly, in a server, host or node operationally coupled to a remote radio head. It is also possible that node operations will be distributed among a plurality of servers, nodes or hosts. It should also be understood that the distribution of labour between core network operations and base station operations may differ from that of the LTE or even be non-existent.

An example 5G Core Network (CN) comprises functional entities. The CN is connected to a UE via the Radio Access Network (RAN). A User Plane Function (UPF) whose role is called PDU Session Anchor (PSA) may be responsible for forwarding frames back and forth between the Data Network (DN) and the tunnels established over the 5G towards the UEs exchanging traffic with the DN.

The UPF is controlled by a Session Management Function (SMF) that receives policies from a Policy Control Function (PCF). The CN may also include an Access and Mobility Function (AMF).

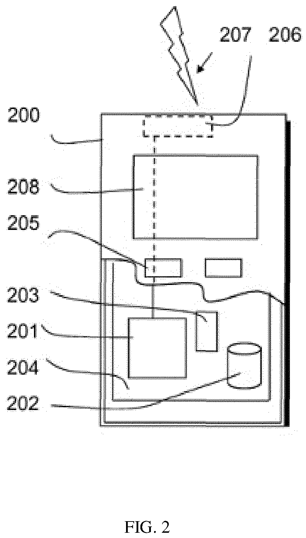

A possible (mobile) communication device 200 will now be described in more detail with reference to FIG. 2 showing a schematic, partially sectioned view. Such a mobile communication device 200 is often referred to as User Equipment (UE), user device or terminal device. An appropriate mobile communication device 200 may be provided by any device capable of sending and receiving radio signals. Non-limiting examples comprise a Mobile Station (MS) or mobile device such as a mobile phone or what is known as a smart phone, a computer provided with a wireless interface card or other wireless interface facility (e.g., USB dongle), Personal Data Assistant (PDA) or a tablet provided with wireless communication capabilities, or any combinations of these or the like. The communication device 200 may provide, for example, communication of data for carrying communications such as voice, electronic mail (e-mail), text message, multimedia and so on. Users may thus be offered and provided numerous services via their communication devices. Non-limiting examples of these services comprise two-way or multi-way calls, data communication or multimedia services or simply an access to a data communications network system, such as the Internet. Users may also be provided broadcast or multicast data. Non-limiting examples of the content comprise downloads, television and radio programs, videos, advertisements, various alerts and other information.

In an industrial application a communication device may be a modem integrated into an industrial actuator (e.g., a robot arm) and/or a modem acting as an Ethernet-hub that will act as a connection point for one or several connected Ethernet devices (which connection may be wired or unwired).

The communication device 200 is typically provided with at least one data processing entity 201, at least one memory 202 and other possible components 203 for use in software and hardware aided execution of tasks it is designed to perform, including control of access to and communications with access systems and other communication devices. The data processing, storage and other relevant control apparatus can be provided on an appropriate circuit board and/or in chipsets 204. The user may control the operation of the communication device 200 by means of a suitable user interface such as keypad 205, voice commands, touch sensitive screen or pad, combinations thereof or the like. A display 208, a speaker and a microphone can be also provided. Furthermore, the communication device 200 may comprise appropriate connectors (either wired or wireless) to other devices and/or for connecting external accessories, for example hands-free equipment, thereto.

The communication device 200 may receive signals over an air or radio interface 207 via appropriate apparatus for receiving and may transmit signals via appropriate apparatus for transmitting radio signals. In FIG. 2, transceiver apparatus is designated schematically by block 206. The transceiver apparatus 206 may be provided for example by means of a radio part and associated antenna arrangement. The antenna arrangement may be arranged internally or externally to the communication device 200.

The communication device 200 may also or alternatively be configured to communicate using one or more Global Navigational Satellite Systems (GNSS such as GPS or GLONASS), one or more mobile television broadcasting standards (e.g., ATSC-M/H or DVB-H), and/or any other wireless communication protocol, if desired. Other combinations of wireless communication standards (including more than two wireless communication standards) are also possible.

Generally, the communication device 200 illustrated in FIG. 2 includes a set of components configured to perform core functions. For example, this set of components may be implemented as a system on chip (SoC), which may include portions for various purposes. Alternatively, this set of components may be implemented as separate components or groups of components for the various purposes. The set of components may be (communicatively) coupled (e.g., directly or indirectly) to various other circuits of the communication device 200.

The communication device 200 may include at least one antenna in communication with a transmitter and a receiver (e.g., the transceiver apparatus 206). Alternatively, transmit and receive antennas may be separate. The communication device 200 may also include a processor (e.g., the at least one data processing entity 201) configured to provide signals to and receive signals from the transmitter and receiver, respectively, and to control the functioning of the communication device 200. The processor may be configured to control the functioning of the transmitter and receiver by effecting control signaling via electrical leads to the transmitter and receiver. Likewise, the processor may be configured to control other elements of the communication device 200 by effecting control signaling via electrical leads connecting processor to the other elements, such as a display (e.g., display 208) or a memory (e.g., the at least one memory 202). The processor may, for example, be embodied in a variety of ways including circuitry, at least one processing core, one or more microprocessors with accompanying digital signal processor(s), one or more processor(s) without an accompanying digital signal processor, one or more coprocessors, one or more multi-core processors, one or more controllers, processing circuitry, one or more computers, various other processing elements including integrated circuits such as, for example, an Application Specific Integrated Circuit (ASIC), a Field Programmable Gate Array (FPGA), and/or the like, or some combination thereof. Accordingly, in some examples, the processor may comprise a plurality of processors or processing cores.

The communication device 200 may be capable of operating with one or more air interface standards, communication protocols, modulation types, access types, and/or the like. Signals sent and received by the processor may include signaling information in accordance with an air interface standard of an applicable cellular system, and/or any number of different wireline or wireless networking techniques, comprising but not limited to Wi-Fi, WLAN techniques, such as Institute of Electrical and Electronics Engineers (IEEE) 802.11, 802.16, 802.3, ADSL, DOCSIS, and/or the like. In addition, these signals may include speech data, user generated data, user requested data, and/or the like.

For example, the communication device 200 and/or a cellular modem therein may be capable of operating in accordance with various 3rd Generation (3G) communication protocols, 4th generation (4G) communication protocols, 5^{th} Generation (5G) communication protocols, Internet Protocol Multimedia Subsystem (IMS) communication protocols such as, for example, Session Initiation Protocol (SIP) and/or the like, or 5G beyond. For example, the communication device 200 may be capable of operating in accordance with 4G wireless communication protocols, such as LTE-A, 5G, and/or the like as well as similar wireless communication protocols that may be subsequently developed.

It is understood that the processor may include circuitry for implementing audio/video and logic functions of the communication device 200. For example, the processor may comprise a digital signal processor device, a microprocessor device, an analog-to-digital converter, a digital-to-analog converter, and/or the like. Control and signal processing functions of the communication device 200 may be allocated between these devices according to their respective capabilities. The processor may additionally comprise an internal voice coder, an internal data modem, and/or the like. Further, the processor may include functionality to operate one or more software programs, which may be stored in memory. In general, the processor and stored software instructions may be configured to cause the communication device 200 to perform actions. For example, the processor may be capable of operating a connectivity program, such as a web browser. The connectivity program may allow the communication device 200 to transmit and receive web content, such as location-based content, according to a protocol, such as Wireless Application Protocol (WAP), HyperText Transfer Protocol (HTTP), and/or the like.

The communication device 200 may also comprise a user interface including, for example, an earphone or speaker, a ringer, a microphone, a display, a user input interface, and/or the like, which may be operationally coupled to the processor. The display may, as noted above, include a touch sensitive display, where a user may touch and/or gesture to make selections, enter values, and/or the like. The processor may also include user interface circuitry configured to control at least some functions of one or more elements of the user interface, such as the speaker, the ringer, the microphone, the display, and/or the like. The processor and/or user interface circuitry comprising the processor may be configured to control one or more functions of one or more elements of the user interface through computer program instructions, for example, software and/or firmware, stored on a memory accessible to the processor, for example, volatile memory, non-volatile memory, and/or the like. The communication device 200 may include a battery for powering various circuits related to the mobile terminal, for example, a circuit to provide mechanical vibration as a detectable output. The user input interface may comprise devices allowing the communication device 200 to receive data, such as a keypad (e.g., keypad 206) and/or other input devices. The keypad can also be a virtual keyboard presented on display or an externally coupled keyboard.

The communication device 200 may also include one or more mechanisms for sharing and/or obtaining data. For example, the communication device 200 may include a short-range radio frequency (RF) transceiver and/or interrogator, so data may be shared with and/or obtained from electronic devices in accordance with RF techniques. The communication device 200 may include other short-range transceivers, such as an infrared (IR) transceiver, a Bluetooth^{™} (BT) transceiver operating using Bluetooth^{™} wireless technology, a wireless Universal Serial Bus (USB) transceiver, a Bluetooth^{™} Low Energy transceiver, a ZigBee transceiver, an ANT transceiver, a cellular device-to-device transceiver, a wireless local area link transceiver, and/or any other short-range radio technology. The communication device 200 and more specifically, the short-range transceiver may be capable of transmitting data to and/or receiving data from electronic devices within the proximity of the apparatus, such as within 10 meters, for example. The communication device 200 including the Wi-Fi or WLAN modem may also be capable of transmitting and/or receiving data from electronic devices according to various wireless networking techniques, including 6LoWPAN, Wi-Fi, Wi-Fi low power, WLAN techniques such as IEEE 802.11 techniques, IEEE 802.15 techniques, IEEE 802.16 techniques, and/or the like.

The communication device 200 may comprise memory, such as one or more Subscriber Identity Modules (SIM), one or more Universal Subscriber Identity Modules (USIM), one or more removable User Identity Modules (R-UIM), one or more Embedded Universal Integrated Circuit Cards (eUICCs), one or more Universal Integrated Circuit Cards (UICC), and/or the like, which may store information elements related to a mobile subscriber. In addition, the communication device 200 may include other removable and/or fixed memory. The communication device 200 may include volatile memory and/or non-volatile memory. For example, the volatile memory may include Random Access Memory (RAM) including dynamic and/or static RAM, on-chip or off-chip cache memory, and/or the like. The non-volatile memory, which may be embedded and/or removable, may include, for example, read-only memory, flash memory, magnetic storage devices, for example, hard disks, floppy disk drives, magnetic tape, optical disc drives and/or media, non-volatile random-access memory (NVRAM), and/or the like. Like volatile memory, the non-volatile memory may include a cache area for temporary storage of data. At least part of the volatile and/or non-volatile memory may be embedded in the processor. The memories may store one or more software programs, instructions, pieces of information, data, and/or the like which may be used by the apparatus for performing operations disclosed herein.

The memories may comprise an identifier, such as an International Mobile Equipment Identification (IMEI) code, capable of uniquely identifying the communication device 200. In the example embodiment, the processor may be configured using computer code stored at memory to cause the processor to perform operations disclosed herein.

Some of the embodiments disclosed herein may be implemented in software, hardware, application logic, or a combination of software, hardware, and application logic. The software, application logic, and/or hardware may reside on the memory, the processor, or electronic components, for example. In some example embodiment, the application logic, software or an instruction set is maintained on any one of various conventional computer-readable media. In the context of this document, a "computer-readable medium" may be any non-transitory media that can contain, store, communicate, propagate or transport the instructions for use by or in connection with an instruction execution system, apparatus, or device, such as a computer or data processor circuitry, with examples depicted at FIG. 2, computer-readable medium may comprise a non-transitory computer-readable storage medium that may be any media that can contain or store the instructions for use by or in connection with an instruction execution system, apparatus, or device, such as a computer.

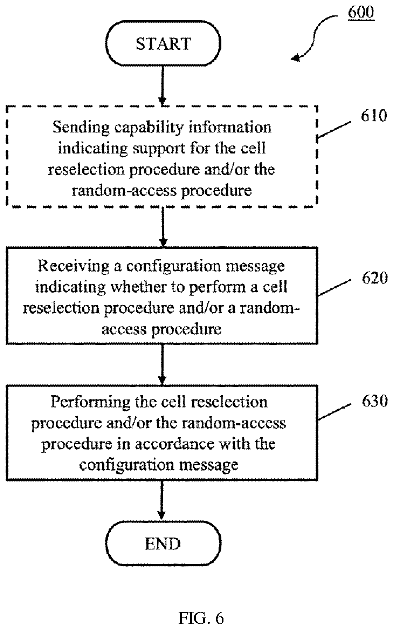

In some embodiments, the communication device 200 (i.e., UE or a user device in a network) comprises the processor (e.g., the at least one data processing entity 201) and the memory (e.g., the at least one memory 202). The memory includes computer program code causing the communication device 200 to perform processing according to the methods described below with reference to FIG. 6.

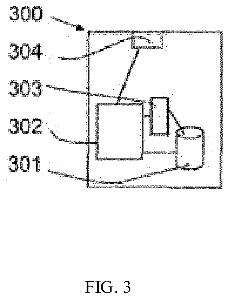

FIG. 3 shows an example embodiment of a control apparatus for a communication system, for example to be coupled to and/or for controlling a station of an access system, such as a RAN node, e.g., a base station, eNB or gNB, a relay node or a core network node such as an MME or S-GW or P-GW, or a core network function such as AMF/SMF, or a server or host. The method may be implanted in a single control apparatus or across more than one control apparatus. The control apparatus may be integrated with or external to a node or module of a core network or RAN. In some embodiments, base stations comprise a separate control apparatus unit or module. In other embodiments, the control apparatus can be another network element such as an RNC or a spectrum controller. In some embodiments, each base station may have such a control apparatus as well as a control apparatus being provided in an RNC. The control apparatus 300 can be arranged to provide control on communications in the service area of the system. The control apparatus 300 comprises at least one memory 301, at least one data processing unit 302, 303 and an input/output interface 304. Via the interface the control apparatus 300 can be coupled to a receiver and a transmitter of the base station. The receiver and/or the transmitter may be implemented as a radio front end or a remote radio head.

Generally, the control apparatus 300 has an antenna, which transmits and receives radio signals. A radio frequency (RF) transceiver module, coupled with the antenna, receives RF signals from antenna, converts them to baseband signals and sends them to processor (e.g., the at least one data processing unit 302, 303). RF transceiver also converts received baseband signals from processor, converts them to RF signals, and sends out to antenna. A processor processes the received baseband signals and invokes different functional modules to perform features in control apparatus 300. Memory (e.g., the at least one memory 301) stores program instructions and data to control the operations of the control apparatus 300. In the example of FIG. 3, the control apparatus 300 also includes protocol stack and a set of control functional modules and circuit. PDU session handling circuit handles PDU session establishment and modification procedures. Policy control module that configures policy rules for UEs. Configuration and control circuit provides different parameters to configure and control UEs of related functionalities including mobility management and session management. Suitable processors include, by way of example, a special purpose processor, a digital signal processor (DSP), a plurality of micro-processors, one or more micro-processor associated with a DSP core, a controller, a microcontroller, ASICs, FPGA circuits, and other type of integrated circuits (ICs), and/or state machines.

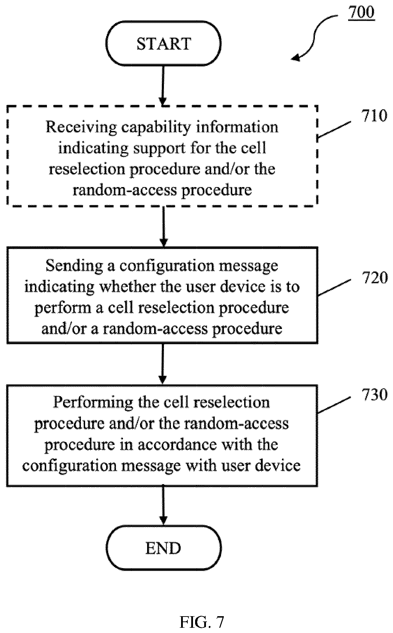

In some embodiments, the control apparatus 300 (i.e., a base station, a wireless transmitting and/or receiving point equipment, or a network node in a network) comprises the processor (e.g., the at least one data processing unit 302, 303) and the memory (e.g., the at least one memory 301). The memory includes computer program code causing the control apparatus 300 to perform processing according to the method described below with reference to FIG. 7.

Before referring to FIGS. 6 to 8 and describing the methods for controlling behavior of a user device towards a cell in a sliced network according to some embodiments of the subject disclosure, some background information and aspects related to the subject disclosure will be provided.

For example, the subject disclosure may be incorporated in a network that may implement network slicing. Network slicing is a concept where network resources of an end-to-end connection between a user device (i.e., UE) and another endpoint in a network such as a Public Land Mobile Network (PLMN) are sliced. Similar network slicing may be employed also in private networks. A network slice may be understood as a logical end-to-end network that can be dynamically created and/or modified. The network(s) between the end devices may all be sliced from one end device to the other end device, the slices thus forming logical pipelines within the network(s). User devices may access a slice over a radio interface. As described e.g. in 3GPP TS 38.300 (e.g., version 16.8.0 Release 16, 2022-01), network slicing will be a key feature in 5G to support different services using the same underlying mobile network infrastructure.

A pipeline/slice may serve a particular service type. So far, three different network slice/service types have been considered: eMBB (slice suitable for the handling of 5G enhanced Mobile Broadband), URLLC (slice suitable for the handling of Ultra-Reliable Low Latency Communication) and MIoT (slice suitable for the handling of massive Internet of Things). Communications Service Providers (CSPs) are able to define additional network slice/service types if needed. A given UE may access to multiple slices over the same access network (over the same radio interface, for example).

Thus, network slicing enables a communications service provider to provide dedicated virtual networks over a common network infrastructure. The different virtual or logical networks may be designed to provide different networking characteristics such as different Quality of Service (QoS) capabilities in order to host services with diverse requirements and Service Level Agreements (SLAs). For example, the virtual networks may be customized to meet specific needs of various applications, services, devices, customers and/or operators. Thus, the network slicing enables provision of different services to the end device. In an example, network slices may differ either in their service requirements like URLLC and eMBB or the tenant that provides those services.

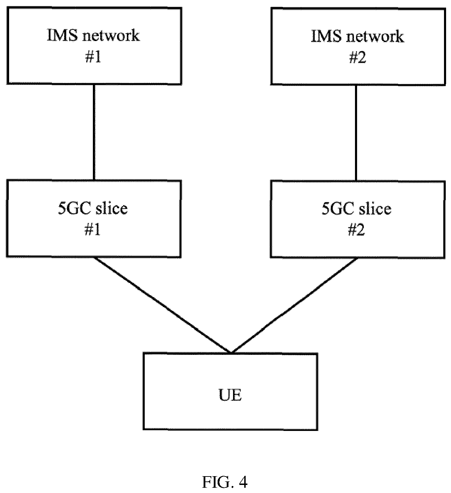

An illustration of a scenario in which a user device (i.e., UE) uses two different services provided by two different networks (e.g., IMS networks) is provided by FIG. 4. In this scenario, the UE is connected through two different network slices (e.g., 5GC network slices) to the IMS networks. That is, the UE is connected through 5GC slice #1 to the IMS network #1 and uses a service provided by the IMS network #1 such as Rich Communication Services (RCS). The UE is also connected through 5GC slice #2 to the IMS network #2 and uses a service provided by the IMS network #2 such as Voice over NR (VoNR). This allows to customize the network slices for the different services hosted by each of the IMS networks.

A network slice is uniquely identified via the Single-Network Slice Selection Assistance Information (S-NSSAI). Current 3GPP specifications allow a user device to be simultaneously connected and served by at most eight network slices corresponding to eight S-NSSAIs. On other hand, each cell may support tens or even hundreds of S-NSSAIs. In current 3GPP specifications, a Tracking Area (TA) can have a support up to 1024 network slices.

The format of the S-NSSAI may include both Slice Service Type (SST) and Slice Differentiator (SD) fields with a total length of 32 bits or include only SST field part in which case the length of S-NSSAI is 8 bits only. The SST field may have standardized and non-standardized values. Values 0 to 127 belong to the standardized SST range. For instance, SST value of 1 may indicate that the slice is suitable for handling of 5G eMBB, 2 for handling of URLLC, etc. SD is operator-defined only.

Another concept that may be implement in a network that incorporates the subject disclosure concerns defining a Tracking Area (TA) and a Registration Area (RA). The TA is a logical concept of an area where a user can move around without updating the MME and is the LTE, EPS or 5GS counterpart of the location area and routing area of GSM, WCDMA and GPRS. The TA consists of a set of cells. TAs can be grouped into lists of tracking areas (TA lists), which can be configured on the UE. For example, the network allocates a list with one or more TAs to the user. In certain operations, the UE may move freely in all TAs of the list without updating the MME. The RA is a list consisting of TAs, which is configured to the UE by the network. The RA are used to track the UE for paging purposes. If the UE leaves the RA, the UE will let the network know through Non-Access Stratum (NAS) registration request (referred to as mobility registration update) such that the correct RA can be configured to the UE.

In 5G, the RA also has the role to maintain allowed slices (alternatively allowed NSSAI) of the UE. The allowed NSSAI is configured to the UE by the network. Throughout the subject disclosure, an allowed S-NSSAI can refer to an S-NSSAI included in the allowed NSSAI. The UE NAS can request access to an S-NSSAI and the network would decide to add that S-NSSAI to the UE's list or not.

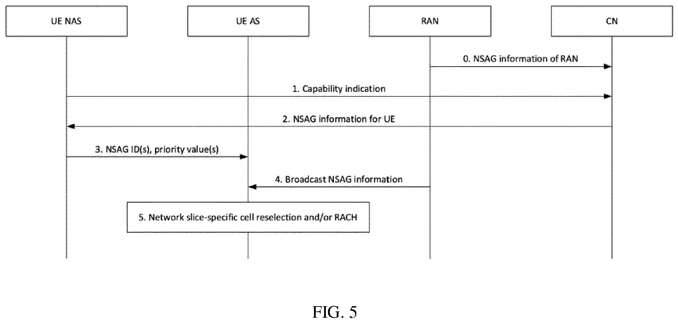

In view of these, and also other, concepts implemented in 5G and beyond, a concept regarding network slice-based cell reselection and network slice-aware random access is discussed. For this concept, several assumptions are made, including among others that a slice is not associated with multiple slice groups for the same purpose within a slice-to-slice group mapping "granularity" (i.e., a slice can be associated at most with one slice group for random access and with one slice group for cell reselection, within the same granularity), and both for random access and for cell reselection, the NAS layer of the UE needs to provide the slice information to the AS layer of the UE and the AS layer is aware of the slice group ID(s) based on such slice information provided by the NAS layer. An exemplary message sequence diagram for said concept will be described with reference to FIG. 5.

FIG. 5 illustrates an exemplary message sequence diagram for the concept of network slice-based cell reselection and network slice-aware random access. The message sequence diagram illustrates the messages exchanged between, and operations performed by, user devices/network nodes of the network. For example, the network (e.g., a 5G network) may comprise one or more network nodes and at least one communication device (e.g., a user equipment (UE)). The exemplary message sequence diagram involves the Core Network (CN) or CN function and a Random Access Network (RAN) or RAN function, as well as an NAS layer and an AS layer of the UE.

The network may configure one or more network slice AS groups (NSAGs) valid in one or more tracking areas (TAs). At step 0, the RAN may provide (or update) the CN (such as the AMF with values of the NSAG(s) in a TA, with which an S-NSSAI is associated, using the NG Set Up and RAN Configuration Update procedures. The CN (or AMF) does not know the purpose of the NSAG(s). That is, the NSAG(s) may be for random access or for cell reselection.

At step 1, the CN (or AMF) may receive capability indication(s) from the NAS layer of the UE. For example, if the UE supports NSAG(s), the UE indicates to the CN that the UE supports NSAG(s) in the 5GMM Core Network Capability.

The CN (or AMF) may configure the UE with NSAG information for one or more S-NSSAIs in the Configured NSSAI, by including the NSAG Information in the Registration Accept message or the UE Configuration Command message, at step 2. When providing NSAG information to the UE, the CN (or AMF) should also provide the NSAG priority information for the NSAG(s) provided in the NSAG information. The CN (or AMF) may determine the NSAG priority information based on operator's policy. If the UE has received NSAG priority information from the CN (or AMF), the UE shall use the NSAG priority information provided by the CN (or AMF) for cell reselection. If the UE has not received any NSAG priority information from the CN (or AMF), the UE shall not use network slice-based cell reselection at all. A S-NSSAI can be associated with at most one NSAG values for random access and at most one NSAG value for cell reselection within a TA. A S-NSSAI can be associated with different NSAG values in different TAs.

At step 3, the NAS layer may provide to the AS layer the NSAG information and the NSAG priority information as received from the CN (or AMF) for the S-NSSAI(s) in the Allowed NSSAI as input to cell reselection except when the UE intends to register with a new set of S-NSSAIs with a Requested NSSAI different from the current Allowed NSSAI, in which case the NAS layer provides to the AS layer the NSAGs and their priorities as received from the CN (or AMF) for the S-NSSAIs in the Requested NSSAI.

At step 4, the AS layer may read NSAG information broadcast/provided by the RAN in RRC signaling and at step 5, the UE may perform cell reselection and/or random access based on NSAG ID(s), priority value(s), and broadcast information.

That is, the NSAG information in steps 0 and 2 depicted in FIG. 5 is divided into NSAG information for cell reselection and NSAG information for random access. If made available to the CN (or AMF), the CN (or AMF) may be allowed to selectively disable the cell reselection based on NSAG at the UE by not indicating priorities or by the exclusion of NSAGs for cell reselection from the configuration. This is however not possible in the exemplary message sequence diagram for the concept of network slice-based cell reselection and network slice-aware random access depicted in FIG. 5 because the NAS layer does not know whether a NSAG ID is for cell reselection or for random access or for both. Whether a NSAG is for cell reselection or for random access turns out only in an implicit way from signaling the UE receives from the RAN (e.g., if a slice group is advertised for cell reselection by RAN, then it may be used for cell reselection).

Consequently, an approach to disable selectively per UE one of cell reselection based on NSAG or random access based on NSAG is required. That is, there is a need for an approach to control a behavior of the UE to selectively enable/disable one of cell reselection or random access.

Now, the methods for controlling behavior of a user device toward a cell in a network according to some embodiments of the subject disclosure will be described.

According to a general example of the method for controlling a user device (e.g., UE) in a network, in a message send from the network to the user device, the network indicates to the user device to perform a cell reselection procedure and/or a random-access procedure taking into account priority of one or more network slice groups. If not specified differently, references to the cell reselection procedure and/or the random-access procedure are to be understood as such procedure(s) which take into account priority of one or more network slice groups. The user device performs the cell reselection procedure and/or the random-access procedure taking into account priority of one or more network slice groups according to the indication. More specifically, the network provides to the user device at least one of the following indications: (1) an indication indicating whether the user device should perform the cell reselection procedure, and (2) an indication indicating whether the user device should perform the random-access procedure. In some examples, the network is a sliced network (i.e., the network provides a plurality of slices). In such a sliced network, the network provides to the user device at least one of the following indications: (1) an indication indicating whether the user device should perform a slice-base cell reselection, and (2) an indication indicating whether the user device should perform a slice-based random-access. Herein, a slice-based procedure is a procedure performed taking into account characteristic (e.g., priority) of slices or slice groups. The indication(s) provided by the network may be explicit or implicit. Further details will be described with reference to the figures hereinbelow.

FIG. 6 illustrates a flow chart of a method for controlling a user device in a network according to some embodiments. More specifically, the illustrated method is to control the behavior of the user device in a sliced network (i.e., in a network that provides a plurality of slices, and the user device may establish connection with one or more of the plurality of slices). The method is performed by a user device (also referred to as a user equipment (UE) hereinbelow), or an apparatus for use in a user device. For example, the UE may be represented by any of the mobile communication devices 102, 104, 105 of the wireless communication system 100 as described above with reference to FIG. 1, or the communication device 200 as described above with reference to FIG. 2.

At step 620, the UE receives a configuration message from the network. More specifically, the UE receives the configuration message from a network node. Examples of the network node include a network node at the Core Network (CN) such as the 5G Mobility Management (5GMM) CN. The network node at the CN may be represented by the Access and Mobility management Function (AMF). The configuration message indicates whether the UE should perform a cell reselection procedure and/or a random-access procedure taking into account priority of one or more network slice groups. In the sliced network, the cell reselection procedure and the random-access procedure are each slice-based, i.e., the procedures are performed with respect to one or more slices provided by the sliced network. Thereby, the network can control behavior of the UE with respect to the procedure(s) (i.e., whether the UE is to perform the cell reselection procedure and/or the random-access procedure) taking into account priority of one or more network slice groups.

The configuration message may include at least one of the following indications: a first indication indicating whether to perform the cell reselection procedure (or sliced-based cell reselection in a sliced network) and a second indication indicating whether to perform the random-access procedure (or sliced-based random-access procedure in a sliced network). That is, the configuration message may include explicit indications. In some examples, each of the indications may be represented by at least one bit. In such examples, the configuration message includes at least one first bit indicating whether to perform the cell reselection procedure (i.e., the first indication). The first bit may have a bit value of "0" which indicates that the cell reselection procedure is not to be performed, while a bit value of "1" indicates that the cell reselection procedure is to be performed by the UE. Also, in such examples, the configuration message includes at least one second bit indicating whether to perform the random-access procedure (i.e., the second indication). The second bit may have a bit value of "0" indicating to not perform the cell reselection procedure, or a bit value of "1" indicating to perform the cell reselection procedure. The given bit values are examples only and a reverse assignment of the bit values or entirely different bit values, especially in the case of multiple bits, may also possible and depend on the specific implementation, as one of ordinary skill will understand. In some embodiments, the configuration message may include a single indication which may have the form of a bit field comprising a plurality of bits. In this case, the plurality of bits comprises at least one first bit indicating whether to perform the cell reselection procedure and at least one second bit indicating whether to perform the random-access procedure.

In some examples, the indication(s) included in the configuration message may also be implicit. As will be described in more detail hereinbelow, in these examples, the UE derives the indication(s) from the presence or absence of information related to the cell reselection procedure and/or the random-access procedure.

In some examples, the configuration message may include a Registration Accept message or a Configuration Command message (such as the CONFIGURATION UPDATE COMMAND message).

That is, the configuration message received at step 620 indicates to the UE whether the UE should enable/disable at least one of the (slice-based or slice-aware) cell reselection procedure or random-access procedure (i.e., random-access procedure (RACH) in 5G-NR). For example, the configuration message may indicate to enable the cell reselection procedure (e.g., the configuration message may include a bit value of "1" relating to the cell reselection procedure) and to disable the random-access procedure (e.g., the configuration message may include a bit value of "0" relating to the random-access procedure).

At step 630, the UE performs the cell reselection procedure and/or the random-access procedure taking into account priority of one or more network slice groups in accordance with the configuration message. More specifically, the UE performs the procedures in accordance with the indication(s) in the configuration message. For example, in response to the configuration message indicating to perform the cell reselection procedure (i.e., enable the cell reselection procedure), the UE performs the cell reselection procedure. The UE does not perform the random-access procedure if the configuration message indicates to not perform the random-access procedure (i.e., disable the random-access procedure). In the sliced network, the cell reselection procedure and the random-access procedure are each slice-based, i.e., the UE performs the procedures with respect to one or more slices provided by the sliced network.

In some examples, the method of FIG. 6 may further comprise, at step 610 (i.e., typically before the configuration message is sent by the network to the UE), sending capability information. That is, the UE sends the capability information towards the network (e.g., the network node or the AMF). The capability information indicates support for the cell reselection procedure and/or the random-access procedure taking into account priority of one or more network slice groups. More specifically, the UE determines whether the UE is capable of supporting the cell reselection procedure (e.g., the slice-based cell reselection procedure in a sliced network). The UE sends the capability information including a corresponding indication relating the cell reselection procedure (i.e., whether the UE supports the cell reselection procedure or not). For example, the capability information may include information indicating "cell reselection supported". In other examples, the capability information may include a bit corresponding to the cell reselection procedure. In these examples, the bit value of the bit indicates whether the UE supports the cell reselection procedure (e.g., bit value of "1") or not (e.g., bit value of "0"). Also, the capability information may also implicitly indicate that the UE does not support the cell reselection procedure. For example, the absence of a corresponding indication relating to the cell reselection procedure in the capability message indicates that the UE does not support the cell reselection procedure. The support for the random-access procedure may be provided in a similar way as the indication relating to support for the cell-reselection procedure. For the sake of clarity and ease of understanding, a detailed explanation is omitted.

Responsive to sending the capability information to the network at step 610, the UE may receive the configuration message at step 620. In this case, the configuration information indicates whether to enable or disable the procedure(s) (i.e., the cell reselection procedure and the random-access procedure) supported by the UE (i.e., indicated in the capability information as being supported). For example, if the UE indicates support for the cell reselection procedure in the capability information but no support for the random-access procedure, the configuration message provides indication to the UE whether the cell reselection procedure supported by the UE is enabled or disabled. In this example, the configuration message does not include an indication for the random-access procedure because the UE indicated no support for the random-access procedure. Thereby, the network can control behavior of the UE with respect to the supported procedure(s).

In some examples, the UE may be implemented to have a layered configuration (i.e., include a plurality of functional layers) including a first layer and a second layer. The first layer may be a non-access stratum (NAS) layer. The NAS layer is a functional layer in the protocol stack between the network (e.g., the CN) and the UE, which is used to manage the establishment of communication sessions and for maintaining continuous communications with the UE as the UE moves. The second layer may be an access stratum (AS) layer. The AS layer is a functional layer in the protocol stack between the network and the UE, which is responsible for carrying information over the wireless portion of the network.

In the examples, where the UE comprises the first layer (i.e., the NAS layer) and the second layer (i.e., the AS layer), the first layer receives the configuration message at step 620 and the second layer performs the cell reselection procedure and/or the random-access procedure according to the indication(s) in the configuration message at step 630. In these examples, the method of FIG. 6 may further include that the first layer provides information corresponding to the indication(s) received with the configuration message to the second layer. For example, the first layer may provide to the second layer information (e.g., the indication(s)) to selectively enable or disable performing the slice-based cell reselection procedure and/or the slice-based random-access procedure. That is, in correspondence to the indication in the configuration message that the UE is to perform the slice-based cell reselection procedure, the first layer provide information (or indication) to enable the slice-based cell reselection procedure. If the configuration message indicated to not perform the slice-based random-access procedure, the first layer may provide information (or indication) to disable the slice-based random-access procedure (i.e., explicit indication) or does not provide information relating to the slice-based random-access procedure at all (i.e., implicit indication). Responsive to receiving the information to enable/disable the cell reselection procedure and/or the random-access procedure, the second layer acts accordingly and performs the slice-based cell reselection procedure and/or the slice-based random-access procedure in accordance with the information (or indication(s)).

the examples, where the UE comprises the first layer (i.e., the NAS layer) and the second layer (i.e., the AS layer), the first layer receives the configuration message at step 620 and the second layer performs the cell reselection procedure and/or the random-access procedure according to the indication(s) in the configuration message at step 630. In these examples, the method of FIG. 6 may further include that the first layer provides, to the second layer, information for the cell reselection procedure if the configuration message implies that the cell reselection procedure taking into account priority of one or more network slice groups needs to be performed, and information for the random-access procedure if the configuration message implies that the random-access procedure taking into account priority of one or more network slice groups needs to be performed.

In yet some other examples, the UE may determine whether the configuration message received at step 620 includes information related to the cell reselection procedure and/or the random-access procedure. More specifically, the UE may determine whether the configuration message includes priority information. For example, in a sliced network, the configuration message may include the NASG information for one or more S-NSSAI in a Configured NSSAI. When the sliced network provides the NSAG information to the UE, the network may also provide the priority information (i.e., NSAG priority information) for the NSAGs provided in the NASG information. In response to receiving the configuration message, the UE may determine whether the configuration message includes the priority information. If the UE determines presence of the priority information, the UE may derive that the configuration message indicates to perform the cell reselection procedure and/or the random-access procedure. That is, the presence of the priority information indicates to the UE to enable at least one of the cell reselection procedure and the random-access procedure. Otherwise, if the UE determines absence of the priority information, the UE may derive that the configuration message indicates to not perform the cell reselection procedure and/or the random-access procedure. That is, the absence of the priority information indicates to the UE to disable at least one of the cell reselection procedure and the random-access procedure. In other words, the presence/absence of the priority information provides implicit indication(s) as to whether to enable/disable at least one of the cell reselection procedure and the random-access procedure. In order to selectively enable or disable one of the slice-based cell reselection procedure and slice-based random-access procedure by including or not including priority information, the NSAG information sent from RAN to CN and from CN to UE can be divided into NSAG information for cell reselection procedure and NSAG information random access procedure.

FIG. 7 illustrates a flow chart of a method for controlling a user device in a network according to some embodiments. More specifically, the illustrated method is to control the behavior of the user device in a sliced network (i.e., in a network that provides a plurality of slices, and the user device may establish connection with one or more of the plurality of slices). The method may performed by the network. More specifically, the method may be performed by one or more network nodes or network functions of the network, or an apparatus for use in a network node or by a network function. For example, the method may be performed by a base station such as the base station represented by the control apparatus 300 as described above with reference to FIG. 3, and/or a core network function such as AMF. That is, examples of the network node include a network node at the Core Network (CN) such as the 5G Mobility Management (5GMM) CN. The network node at the CN may be represented by the AMF.

At step 720, the network sends a configuration message to the user device. The user device may be a user equipment (UE), or an apparatus for use in a user device. In some examples, the configuration message is sent by a network node. The configuration message indicates whether the UE should perform a cell reselection procedure and/or a random-access procedure taking into account priority of one or more network slice groups. In the sliced network, the cell reselection procedure and the random-access procedure are each slice-based, i.e., the procedures are performed with respect to one or more slices provided by the sliced network. Thereby, the network can control behavior of the UE with respect to the procedure(s) (i.e., whether the UE is to perform the cell reselection procedure and/or the random-access procedure).

Details regarding the configuration message and indications whether the UE is to perform at least one of the cell reselection procedure and the random-access procedure have already been described above in connection with the description of FIG. 6. Repetition is omitted here for reasons of clarity and ease of understanding. Instead, reference is made to the above explanations.

That is, the configuration message sent at step 720 indicates to the UE whether the UE should enable/disable at least one of the (slice-based or slice-aware) cell reselection procedure or random-access procedure (i.e., random-access procedure (RACH) in 5G-NR). For example, the configuration message may indicate to enable the cell reselection procedure (e.g., explicit indication to enable the cell reselection procedure; implicit indication to enable the cell reselection procedure by presence of NSAG priority information for NSAGs provided in NASG information) and to disable the random-access procedure (e.g., explicit indication to disable the random-access procedure; implicit indication to disable the random-access procedure by absence of NSAG priority information for NSAGs provided in NASG information).

In some examples, the configuration message may include a Registration Accept message or a Configuration Command message (such as the CONFIGURATION UPDATE COMMAND message).

At step 730, the network performs the cell reselection procedure and/or the random-access procedure taking into account priority of one or more network slice groups in accordance with the configuration message with the UE. More specifically, the UE performs the procedures with the network in accordance with the indication(s) in the configuration message. In the sliced network, the cell reselection procedure and the random-access procedure are each slice-based, i.e., the UE performs the procedures with respect to one or more slices provided by the sliced network.

In some examples, the method of FIG. 7 may further comprise, at step 710 (i.e., typically before the configuration message is sent by the network to the UE), receiving capability information from the UE. Details regarding the capability information have already been described above in connection with the description of FIG. 6. Repetition is omitted here for reasons of clarity and ease of understanding. Instead, reference is made to the above explanations.

That is, the network receives the capability information indicating support for the cell reselection procedure and/or the random-access procedure taking into account priority of one or more network slice groups from the UE. Responsive to receiving the capability information from the UE at step 710, the network may send the configuration message to the UE at step 720. In this case, the configuration information indicates whether to enable or disable the procedure(s) (i.e., the cell reselection procedure and the random-access procedure) supported by the UE (i.e., indicated in the capability information as being supported). For example, if the UE indicates support for the cell reselection procedure in the capability information but no support for the random-access procedure, the configuration message provides indication to the UE whether the cell reselection procedure supported by the UE is enabled or disabled. In this example, the configuration message does not include an indication for the random-access procedure because the UE indicated no support for the random-access procedure. Thereby, the network can control behavior of the UE with respect to the supported procedure(s).

In some examples, in a sliced network, the configuration message may include the NASG information for one or more S-NSSAI in a Configured NSSAI. When the sliced network provides the NSAG information to the UE, the network may also provide the NSAG priority information for the NSAGs provided in the NASG information.

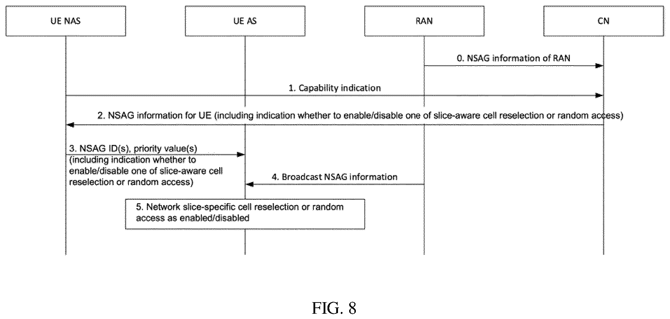

Referring to FIG. 8, a method for controlling behavior of a user device according to an embodiment of the subject disclosure will now be described.

FIG. 8 illustrates an exemplary message sequence diagram of a method for controlling a user device in a network according to some embodiments. The message sequence diagram illustrates the message exchanged between, and operations performed by, user devices/network nodes of the network. For example, the network (e.g., a 5G network) may comprise the example communication system as illustrated in FIG. 1. The network may comprise one or more network nodes (e.g., one or more base stations and one or more control functions; an exemplary network node or apparatus for use in a network node is illustrated in FIG. 3) and at least one communication device (e.g., a user device such as the user equipment (UE) as illustrated in FIG. 2 or an apparatus for use in a user device). The network may be a sliced network providing one or more network slices.

The network may configure one or more network slice AS groups (NSAGs) valid in one or more tracking areas (TAs). At step 0, the RAN may provide (or update) the CN such as the AMF with values of the NSAG(s) in a TA, with which an S-NSSAI is associated, using the NG Set Up and RAN Configuration Update procedures specified in the 3GPP standard specification. Detailed explanations regarding these procedures are omitted here as one of ordinary skill is aware of these procedures from the current 3GPP standard specification. The CN (or AMF) typically does not know the purpose of the NSAG(s). In other words, the CN does not know whether the NSAG(s) are to be used for the random-access procedure or for the cell reselection procedure to be performed by the UE.

At step 1, the CN (or AMF) receives capability information or capability indication from the UE. Detailed explanations regarding the capability information are provided above with reference to step 610 shown in FIG. 6 and step 710 shown in FIG. 7 and are omitted here for the sake of clarity and ease of understanding. For example, if the UE supports NSAG(s), the UE indicates to the CN that the UE supports NSAG(s) in the 5GMM Core Network Capability.

The CN (or AMF) may configure the UE with NSAG information for one or more S-NSSAIs in the Configured NSSAI, by including the NSAG Information in the Registration Accept message or the UE Configuration Command message, at step 2. Detailed explanations regarding the configuration message sent from the CN to the UE are provided above with reference to step 620 shown in FIG. 6 and step 720 shown in FIG. 7 and are omitted here for the sake of clarity and ease of understanding. For example, when the CN (or AMF) provides NSAG information to the UE, the CN (or AMF) should also provide NSAG priority information for the NSAG(s) provided in the NSAG Information. The CN (or AMF) may determine the NSAG priority information based on a policy of the operator of the network. If the UE has received NSAG priority information from the CN (or AMF), the UE shall use the NSAG priority information provided by the CN (or AMF) for the cell reselection procedure. If the UE received indication to enable/disable the (slice-based or slice-aware) cell reselection procedure only or (slice-based or slice-aware) random-access procedure only, then the UE behaves accordingly. In some examples, a S-NSSAI can be associated with at most one NSAG values for the random-access procedure and at most one NSAG value for the cell reselection procedure within a TA. In other examples, a S-NSSAI can be associated with different NSAG values in different TAs.

That is, in the examples according to the subject disclosure, the CN provides to the UE (more specifically, the NAS layer of the UE) at least one of the following two indications: (1) an indication indicating whether the UE should perform slice-based cell reselection; and (2) an indication indicating whether the UE should perform slice-based RA. The indications may be provided explicitly.

At step 3, the NAS layer of the UE may provide to the AS layer of the UE the NSAG information and the NSAG priority information as received from the CN (or AMF) for the S-NSSAI(s) in the Allowed NSSAI as input to cell reselection. When the UE intends to register with a new set of S-NSSAI(s) with a Requested NSSAI different from the current Allowed NSSAI, the NAS layer of the UE may provide to the AS layer of the UE at step 3 the NSAG information and the NSAG priority information as received from the CN (or AMF) for the S-NSSAI(s) in the Requested NSSAI. In addition, the NAS layer of the UE may provide indication(s) to the AS layer of the UE to selectively enable/disable (slice-based or slice-aware) random-access procedure or cell reselection procedure. Alternatively, the NAS layer of the UE may not provide NSAG information to the AS layer of the UE for the random-access procedure or for the cell reselection procedure in case of an explicit indication that the random-access procedure or the cell reselection procedure should not be performed.

That is, the NAS layer of the UE indicates to the AS layer of the UE to operate according to the indication(s) provided by the CN (or AMF). The indication(s) may correspond to a single indication with multiple bits and may also be a response to the UE MM capability that indicates if the UE supports one or both features (i.e., random-access procedure and the cell reselection procedure).

At step 4, the UE (more specifically the AS layer of the UE) may read NSAG information broadcast/provided by the RAN in RRC signaling.

Finally, at step 5, the UE may only consider information that is relevant according to the information received at step 2. The UE may perform the cell reselection procedure and/or the random-access procedure based on NSAG information (e.g., NSAG ID(s)), the NSAG priority information (i.e., the NSAG priority value(s)), and the broadcast information. That is, the UE may perform the cell reselection procedure and/or the random-access procedure in accordance with the indication(s) (i.e., as enabled/disabled). Detailed explanations regarding performing the cell reselection procedure and/or the random-access procedure in accordance with the indication(s) are provided above with reference to step 630 shown in FIG. 6 and step 730 shown in FIG. 7 and are omitted here for the sake of clarity and ease of understanding.

In accordance with the subject disclosure, the UE may operate according to the indication(s) and refer to the explicit indication(s) or the implicit indication(s) based on exclusion or absence of priority information (priority value(s)). For example, the NAS layer of the UE may provide the AS layer of the UE with the indication(s) and the AS layer may operate according to the indication(s). If the indication to perform the cell reselection procedure indicates that the UE should perform the network slice-based cell reselection procedure and the indication to perform the random-access procedure indicates that the UE should not perform the network slice-based random-access procedure, the AS layer performs the network slice-based cell reselection procedure and does not perform the network slice-based random-access procedure. In another example, the NAS layer may receive from the AS layer the groups relevant for the current location for random-access or cell reselections purposes. The NAS layer may provide NSAG ID(s) and priority value(s) to the AS layer according to the indication(s). For example, if the indication for the cell reselection procedure indicates that the UE should perform the network slice-based cell reselection procedure and the indication for the random-access procedure (i.e., RACH) indicates that the UE should not perform the network slice-based random-access procedure, the NAS layer provides NSAG ID(s) and priority value(s) only when the NSAG ID(s) and priority value(s) need to be provided for the cell reselection procedure, not when the NSAG ID(s) and priority value(s) need to be provided for the random-access procedure.

The method according to the subject disclosure may be useful as the operator of the network can enable/disable one of the random-access procedure or the cell reselection procedure for specific UEs only but still provide the NSAG configuration to the UE so that the UE can use the remaining feature that is still usable (i.e., slice-aware cell reselection or random-access respectively). Accordingly, the CN becomes aware of which slice groups are used for which purpose(s), irrespective of whether only the RAN signaling to the UE decides if a slice group is used for a purpose. In an alternative implementation, signaling the related slice groups to the UE may be omitted.

In accordance with the subject disclosure, NSAG information may be handled as described hereinforth.

NSAG information includes:
a) for each S-NSSAI in (a subset of) the configured NSSAI:
   1) one or more NSAG IDs, where each of the NSAG ID(s) is optionally associated with an NSAG area, a list of TAIs identifying an area where the mapping between the S-NSSAI and the NSAG ID is valid; and
   2) a priority value, where a lower priority value has higher priority;
b) an NSAG-based cell reselection indication; and
c) an NSAG-based random access indication.
If NSAG information is available and the NSAG-based cell reselection indication in the NSAG information is set to "true", the UE NAS layer shall provide the lower layers with one or more NSAG IDs for cell reselection each of which is associated with a priority value and, optionally, an NSAG area when:
a) the UE enters 5GMM-IDLE mode or 5GMM-CONNECTED mode with RRC inactive indication; and
b) there is any change in the NSAG ID(s) and the priority value(s) provided to the lower layers earlier while the UE is in 5GMM-IDLE mode or 5GMM-CONNECTED mode with RRC inactive indication;
where the UE determines:
a) the NSAG ID(s) for cell reselection and, if applicable, the NSAG area(s) based on:
   1) an NSSAI which corresponds to:
      i) if the UE needs to initiate the registration procedure for mobility and periodic registration update or no allowed NSSAI is available in the UE, the requested NSSAI; or
      ii) otherwise, the allowed NSSAI; and
   2) the NSAG information; and
b) the priority value(s) based on:
   1) the NSAG ID(s) determined in bullet a); and
   2) the NSAG information.

The priority value of an NSAG ID is set to the lowest priority value among the priority value(s) of the S-NSSAI(s) associated with the NSAG ID.

If NSAG information is available and the NSAG-based random access indication in the NSAG information is set to "true", the UE NAS layer shall provide the lower layers with one or more NSAG IDs for random access each of which is associated with a priority value when the UE in 5GMM-IDLE mode or 5GMM-CONNECTED mode with RRC inactive indication requires a transition to 5GMM-CONNECTED mode, where the UE determines:
a) the NSAG ID(s) for random access based on:
   1) an NSSAI which corresponds to:
      i) if the UE is in 5GMM-IDLE mode, the NSSAI; or
      ii) if the UE is in 5GMM-CONNECTED mode with RRC inactive indication and the transition to 5GMM-CONNECTED mode is needed due to:
         A) an uplink user data packet to be sent for a PDU session with suspended user-plane resources or an UL NAS TRANSPORT which carries a 5GSM message for a PDU session associated with an S-NSSAI, the S-NSSAI associated with the PDU session;
         B) a trigger to initiate a registration procedure or a service request procedure, the NSSAI; or
         C) other reason than those specified in bullets A) and B), the allowed NSSAI;
   2) the current TAI; and
   3) the NSAG information; and
b) the priority value(s) based on:
   1) the NSAG ID(s) determined in bullet a); and
   2) the NSAG information.

The priority value of an NSAG ID is set to the highest priority value among the priority value(s) of the S-NSSAI(s) associated with the NSAG ID.

The AMF may indicate, via the NSAG information IE of a REGISTRATION ACCEPT message or a CONFIGURATION UPDATE COMMAND message, NSAG information if the UE indicated, via the NSAG bit in the 5GMM capability IE in the most recent REGISTRATION REQUEST message, that the UE supports NSAG information.

In accordance with the subject disclosure, the generic UE configuration update procedure initiated by the network, the initial registration accepted by the network, and the mobility and periodic registration update accepted by the network may include the following: If the UE has set the NSAG bit in the 5GMM capability IE of the (latest) REGISTRATION REQUEST message to "NSAG supported" and the NSAG information needs to be updated or is available, then the AMF shall include the NSAG information in the CONFIGURATION UPDATE COMMAND message or in the REGISTRATION ACCEPT message. In accordance with the subject disclosure, the generic UE configuration update accepted by the UE, the initial registration accepted by the network, and the mobility and periodic registration update accepted by the network may include the following: If the CONFIGURATION UPDATE COMMAND message or the REGISTRATION ACCEPT message contains an NSAG information IE, the UE shall store the contents of the NSAG information IE. The REGISTRATION ACCEPT message and the CONFIGURATION UPDATE COMMAND message may include an information element (IE) for the NSAG information. The IE may be included to provide NSAG information to a UE capable of handling NSAG information. The IE for the NSAG information may be coded to include:
NSAG-based cell reselection indication (CellResel) (octet 4, bit 1). This bit indicates whether the UE needs to perform NSAG-based cell reselection. A bit value of "0" may indicate "false" while a bit value of "1" may indicate "true".
NSAG-based random access indication (RandAcc) (octet 4, bit 2). This bit indicates whether the UE needs to perform NSAG-based random access. A bit value of "0" may indicate "false" while a bit value of "1" may indicate "true".

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst embodiments have been described in relation to LTE and 5G NR, similar principles can be applied in relation to other networks and communication systems where enforcing fast connection re-establishment is required. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes exemplary embodiments, there are several variations and modifications which may be made to the disclosed solution without departing from the scope of the subject disclosure.

In general, the various exemplary embodiments may be implemented in hardware or special purpose circuits, software, logic or any combination thereof. Some aspects of the subject disclosure may be implemented in hardware, while other aspects may be implemented in firmware or software which may be executed by a controller, microprocessor or other computing device, although the subject disclosure is not limited thereto. While various aspects of the subject disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Example embodiments of the subject disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may comprise one or more of general-purpose computers, special purpose computers, microprocessors, digital signal processors (DSPs), application specific integrated circuits (ASICs), FPGA, gate level circuits and processors based on multi-core processor architecture, as non-limiting examples.

Example embodiments of the subject disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The foregoing description has provided by way of non-limiting examples a full and informative description of the exemplary embodiment of the subject disclosure. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of the subject disclosure as defined in the appended claims. Indeed, there is a further embodiment comprising a combination of one or more embodiments with any of the other embodiments previously discussed.

## Claims

1. A method for controlling a user device, comprising:
receiving, by the user device, a configuration message from a network node, the configuration message including network slice access stratum group, NSAG, information; and
performing a random access in accordance with the NSAG information and a single network slice selection assistance information, S-NSSAI,
wherein the S-NSSAI is associated with a protocol data unit session for which an uplink user data packet is to be sent or a session management message is associated with.

2. The method of claim 1, wherein the user device is in 5G Mobility Management, 5GMM, connected mode with Radio Resource Control, RRC, inactive indication.

3. The method of claim 1 or 2, wherein the network node is access and mobility management function, AMF.

4. The method of any one of claims 1 to 3, comprising:
setting, by the user device, a NSAG bit showing the ability of the user device to support NSAG function.

5. The method of claim 4, wherein the NSAG bit is in the 5GMM capability IE of a registration request message.

6. The method of any one of claims 1 to 5, wherein an uplink user data packet is to be sent with suspended user-plane resources.

7. A method for a network node, comprising:
sending, by the network node, a configuration message to a user device, the configuration message including network slice access stratum group, NSAG, information; wherein the NSAG information is used for:
performing, by the network node, a random-access procedure taking into account the NSAG information and a single network slice selection assistance information, S-NSSAI, in accordance with the configuration message with the user device,
wherein the S-NSSAI is associated with a protocol data unit session for which an uplink user data packet is to be sent or a session management message is associated with.

8. The method of claim 7, wherein the user device is in 5G Mobility Management, 5GMM, connected mode with Radio Resource Control, RRC, inactive indication.

9. The method of claim 7 or 8, wherein the network node is access and mobility management function, AMF.

10. The method of any one of claims 7 to 9, comprising:
receiving, from the user device, a NSAG bit showing the ability of the user device to support NSAG function.

11. The method of claim 10, wherein the NSAG bit is in the 5GMM capability IE of a registration request message.

12. The method of any one of claims 7 to 11, wherein an uplink user data packet is to be sent with suspended user-plane resources.

13. The method of any one of claims 7 to 12, wherein the network node sends the NSAG information in a configuration update command message or in a registration accept message.

14. A user device, comprising:
means being adapted to receive a configuration message from a network node, the configuration message including network slice access stratum group, NSAG, information; and
means being adapted to perform a random access in accordance with the NSAG information and a single network slice selection assistance information, S-NSSAI,
wherein the S-NSSAI is associated with a protocol data unit session for which an uplink user data packet is to be sent or a session management message is associated with.

15. A network device in a network, comprising:
means being adapted to send a configuration message to a user device, the configuration message including network slice access stratum group, NSAG, information; wherein the NSAG information is used for:
performing a random-access procedure taking into account the NSAG information and a single network slice selection assistance information, S-NSSAI, in accordance with the configuration message with the user device,
wherein the S-NSSAI is associated with a protocol data unit session for which an uplink user data packet is to be sent or a session management message is associated with.
